# EUROPÄISCHE PATENTSCHRIFT

(11) **EP 1 473 296 B1**
(45) Veröffentlichungstag und Bekanntmachung des Hinweises auf die Patenterteilung: **02.08.2006**
(21) Anmeldenummer: 04009612.5
(22) Anmeldetag: 22.04.2004
(51) Int. Cl.: C07F 7/18, C09C 3/12

(54) **Organofunktionelle oberflächenmodifizierte Metalloxide**
Organofunctional surface modified metal oxides
Oxydes de métal à surface modifiée organofonctionelle

(30) Priorität: 02.05.2003 DE 10319937
(43) Veröffentlichungstag der Anmeldung: 03.11.2004
(73) Patentinhaber: Wacker Chemie AG, 81737 München (DE)
(72) Erfinder: Gottschalk-Gaudig, Torsten, Dr., 84489 Burghausen (DE); Barthel, Herbert, Dr., 84547 Emmerting (DE); Pfeiffer, Jürgen, Dr., 84489 Burghausen (DE)
(74) Vertreter: Gössmann, Christoph Tassilo

(56) Entgegenhaltungen:
- EP-B- 0 896 026
- DATABASE CHEMABS [Online] CHEMICAL ABSTRACTS SERVICE, COLUMBUS, OHIO, US; 1985, WU, XUQIN ET AL: "Reaction between silanes and fumed silica surface" XP002287114 gefunden im STN Database accession no. 1988:131899 & FUHE CAILIAO XUEBAO , 2(4), 1-8 CODEN: FCXUEC; ISSN: 1000-3851, 1985,
- DATABASE CHEMABS [Online] CHEMICAL ABSTRACTS SERVICE, COLUMBUS, OHIO, US; 1981, MOROZOVA, E. M. ET AL: "Polymerization of acrylic monomers in the presence of Aerosil" XP002287115 gefunden im STN Database accession no. 1981:498753 & PLASTICHESKIE MASSY , (7), 7-8 CODEN: PLMSAI; ISSN: 0554-2901, 1981,
- DATABASE CHEMABS [Online] CHEMICAL ABSTRACTS SERVICE, COLUMBUS, OHIO, US; 1980, MOROZOVA, E. M. ET AL: "Role of the interface in the polymerization of filled monomers. Properties of the composite polymers prepared" XP002287116 gefunden im STN Database accession no. 1981:85024 & MEKHANIKA KOMPOZITNYKH MATERIALOV , (5), 924-7 CODEN: MKMADT; ISSN: 0203-1272, 1980,
- DATABASE CHEMABS [Online] CHEMICAL ABSTRACTS SERVICE, COLUMBUS, OHIO, US; 1979, SCHULZ, D. ET AL: "Infrared spectroscopic study of the adsorption of methacrylates on aerosil" XP002287117 gefunden im STN Database accession no. 1980:23004 & REACTION KINETICS AND CATALYSIS LETTERS , 12(2), 113-17 CODEN: RKCLAU; ISSN: 0304-4122, 1979,
- DATABASE CHEMABS [Online] CHEMICAL ABSTRACTS SERVICE, COLUMBUS, OHIO, US; 1965, TERTYKH, V. A. ET AL: "Surface chemistry of functional organosilicon fillers chemically interacting with polymers" XP002287118 gefunden im STN Database accession no. 1966:404543 & MODIFIKATSIYA SVOISTV POLIMEROV I POLYMERNYKH MATERIALOV, AKAD. NAUK UKR. SSR, RESP. MEZHVEDOMSTV. SB. 85-95, 1965,

## Beschreibung

Die Erfindung betrifft ein Verfahren zur Herstellung eines organofunktionalisiertem Metalloxids und ein Metalloxid.

Die Oberflächenmodifizierung von Feststoffen, seien es pulverförmige Feststoffe oder massive (Bulk-) Feststoffe, steht häufig vor dem Problem, dass die Oberflächenmodifierung nicht permanent ist, d.h. das Agens der Oberflächenmodifizierung ist nicht ausreichend auf der Oberfläche verankert, und wird daher durch Lösemittel oder das umgebende Medium oder die umgebende Matrix abgelöst und ausgewaschen. Dieses Problem kann überwunden werden, indem eine feste chemische Anbindung unter Ausbildung chemischer Bindungen erzielt wird, wie dies beispielsweise in EP 896029 B1 offenbart wurde. Letzteres Vorgehen weist dann jedoch den Nachteil auf, dass bei den bekannten Verfahren hohe Temperaturen und lange Reaktionszeiten erforderlich sind, die insbesondere bei Modifizierungsagenzien, die reaktive organische Gruppen wie Methacrylat-, Epoxy- oder Isocyanat-Gruppen tragen, zu Zersetzungsreaktionen führen können. Dies führt zu einer unerwünschten Reduzierung des Gehaltes an funktionellen Gruppen und der Bildung von Nebenreaktionsprodukten, die die Qualität der modifizierten Füllstoffe beeinträchtigen.

Nebenreaktionsprodukte und ein Verlust an funktionellen Gruppen sind insbesondere dann nachteilig, wenn der Feststoff mit dem Ziel der Verbesserung der Haftung oder Vernetzung mit dem umgebenden Medium oberflächenbehandelt wird, da solche Nebenreaktionsprodukte die Haftung oder Vernetzung in unkontrollierbarer Art und Weise verändern können und Vernetzungsreaktionen empfindlich von der genauen Einhaltung der Stöchiometrie der reaktiven Gruppen abhängen.

Nebenreaktionsprodukte sind insbesondere dann nachteilig, wenn der Pulver-förmige Feststoff als rheologisches Additiv in flüssigen Medien wie Polymeren und Harzen oder Harzlösungen eingesetzt werden, da solche Nebenreaktionsprodukte die Rheologie in unkontrollierbarer Art und Weise verändern können.

Nebenreaktionsprodukte sind darüberhinaus insbesondere dann nachteilig, wenn der Pulver-förmige Feststoff als Rieselhilfe und triboelektrisches Ladungssteuerungsmittel in pulverförmigen Systemen, wie Tonern, Entwicklern oder Pulver-förmigen Lacken oder Anstrichsystemen eingesetzt werden, da solche Nebenreaktionsprodukte das freie Fliessen und triboelektrische Effekte in unkontrollierbarer Art und Weise verändern können.

Bekannt ist der Zusatz von Lewis-sauren oder -basischen Katalysatoren zur Beschleunigung der Reaktion und zur Verbesserung der Reaktionsausbeute von Kieselsäure mit Alkoxysilanen. Dies hat jedoch den Nachteil, dass die Katalysatoren zwar die Bindungsreaktion der Modifizierungsreagenzien beschleunigen, jedoch darüber hinaus auch häufig die Zersetzungsreaktionen der funktionellen Gruppen katalysieren.

Der Erfindung lag die Aufgabe zugrunde, einen oberflächenmodifizierten Feststoff bereitzustellen, der die Nachteile des Standes der Technik nicht aufweist.

Gegenstand der Erfindung ist ein Verfahren zur Herstellung eines Metalloxids mit Gruppen der allgemeinen Formel I

-O₁₊ₙ-S1R¹₂₋ₙ-CH₂-Y (I),

bei dem ein Feststoff, der an der Oberfläche OH-Gruppen aufweist, mit Silanen der allgemeinen Formel II

RO₁₊ₙ-S1R¹₂₋ₙ-CH₂-Y (II),

umgesetzt wird, wobei
- **R**: ein C-O gebundener C₁-C₁₅-Kohlenwasserstoff-Rest, bevorzugt ein C₁-C₈-Kohlenwasserstoff-Rest, besonders bevorzugt ein C₁-C₃-Kohlenwasserstoff-Rest, oder ein Acetylrest
- **R**^{**1**}: ein Wasserstoffatom oder einen gegebenenfalls mit -CN, -NCO, -NR^{**x**}_{2'} -COOH, -COOR^{**x**}, -Halogen, -Acryl,-Epoxy, -SH, -OH oder -CONR^{**x**}₂ substituierten Si-C gebundenen C₁-C₂₀-Kohlenwasserstoffrest, bevorzugt ein C₁-C₈- Kohlenwasserstoff-Rest, besonders bevorzugt ein C₁-C₃- Kohlenwasserstoff-Rest, oder ein Arylrest, oder C₁-C₁₅- Kohlenwasserstoffoxyrest, bevorzugt ein C₁-C₈- Kohlenwasserstoffoxy-Rest, besonders bevorzugt ein C₁-C₄- Kohlenwasserstoffoxy-Rest, in denen jeweils eine oder mehrere, einander nicht benachbarte Methyleneinheiten durch Gruppen -O-, -CO-, -COO-, -OCO-, oder -OCOO-, -S-, oder-NR^{**x**}- ersetzt sein können und in denen eine oder mehrere, einander nicht benachbarte Methineinheiten durch Gruppen, - N=,-N=N-,oder -P= ersetzt sein können, wobei R¹ gleich oder verschieden sein kann,
- **Y**: eine funktionelle Gruppe -NR^{x}₂, -OC(O)C(R)=CH₂ (R = H , C₁- C₁₅-Kohlenwasserstoff-Rest, bevorzugt ein C₁-C₈- Kohlenwasserstoff-Rest, besonders bevorzugt ein C₁-C₃- Kohlenwasserstoff-Rest), -Halogen, -NCO, -NH-C(O)-OR (R = C₁-C₁₅-Kohlenwasserstoff-Rest, bevorzugt ein C₁-C₈- Kohlenwasserstoff-Rest, besonders bevorzugt ein C₁-C₃- Kohlenwasserstoff-Rest), -Glycidoxy, -S_{H}, (R¹O)₂(O)P-
- **R**^{**x**}: ein Wasserstoffatom oder C₁-C₁₅-Kohlenwasserstoff- bevorzugt ein C₁-C₈-Kohlenwasserstoff-Rest und besonders bevorzugt ein C₁-C₃-Kohlenwasserstoff-Rest, oder Arylrest, wobei R^{x} gleich oder verschieden sein kann, und n = 0, 1, 2 bedeutet.

Eingesetzte Silane der Formel II sind vorzugsweise
Aminomethyldimethylmethoxysilan,
Aminomethylmethyldimethoxysilan,
Aminomethyltrimethoxysilan,
N-Methylaminomethyldimethylmethoxysilan,
N-Methylaminomethylmethyldimethoxysilan,
N-Methylaminomethyltrimethoxysilan,
N-Ethylaminomethyldimethylmethoxysilan,
N-Ethylaminomethylmethyldimethoxysilan,
N-Ethylaminomethyltrimethoxysilan,
N,N-Dimethylaminomethyldimethylmethoxysilan,
N,N-Dimethylaminomethylmethyldimethoxysilan,
N,N-Dimethylaminomethyltrimethoxysilan,
N,N-Diethylaminomethyldimethylmethoxysilan,
N,N-Diethylaminomethylmethyldimethoxysilan,
N,N-Diethylaminomethyltrimethoxysilan,
N,N-Dipropylaminomethyldimethylmethoxysilan,
N,N-Dipropylaminomethylmethyltrimethoxysilan,
N,N-Dipropylaminomethyltrimethoxysilan,
N,N-Methylethylaminomethyldimethylmethoxysilan,
N,N-Methylethylaminomethylmethyldimethoxysilan,
N,N-Methylethylaminomethyltrimethoxysilan,
Anilinomethyldimethylmethoxysilan,
Anilinomethylmethyldimethoxysilan,
Anilinomethyltrimethoxysilan,
Morpholinomethyldimethylmethoxysilan,
Morpholinomethylmethyldimethoxysilan,
Morpholinomethyltrimethoxysilan,
N,N,N-Trimethylammoniummethyldimethylmethoxysilan,
N,N,N-Trimethylammoniummethylmethyldimethoxysilan,
N,N,N-Trimethylammoniummethyltrimethoxysilan,
N,N,N-Triethylammoniummethyldimethylmethoxysilan,
N,N,N-Triethylammoniummethylmethyldimethoxysilan,
N,N,N-Triethylammoniummethyltrimethoxysilan,
Acryloxymethyldimethylmethoxysilan,
Acryloxymethylmethyldimethoxysilan,
Acryloxymethyltrimethoxysilan,
Methacryloxymethyldimethylmethoxysilan,
Methacryloxymethylmethyldimethoxysilan,
Methacryloxymethyltrimethoxysilan,
Chlormethyldimethylmethoxysilan,
Chlormethylmethyldimethoxysilan,
Chlormethyltrimethoxysilan,
Isocyanatomethyldimethylmethoxysilan,
Isocyanatomethylmethyldimethoxysilan,
Isocyanatomethyltrimethoxysilan,
Methylcarbamatomethyldimethylmethoxysilan,
Methylcarbamatomethylmethyldimethoxysilan,
Methylcarbamatomethyltrimethoxysilan,
Mercaptomethyldimethylmethoxysilan,
Mercaptomethylmethyldimethoxysilan,
Mercaptomethyltrimethoxysilan,
Glycidoxymethyldimethylmethoxysilan,
Glycidoxymethylmethyldimethoxysilan,
Glycidoxymethyltrimethoxysilan,
Dimethoxyphosphorigester-Methyl-Dimethylmethoxysilan,
Dimethoxyphosphorigester-Methyl-Methyldimethoxysilan,
Dimethoxyphosphorigester-Methyl-Trimethoxysilan,
Diethoxyphosphorigester-Methyl-Dimethylmethoxysilan,
Diethoxyphosphorigester-Methyl-Methyldimethoxysilan,
Diethoxyphosphorigester-Methyl-Trimethoxysilan,
Diphenoxyphosphorigester-Methyl-Dimethylmethoxysilan,
Diphenoxyphosphorigester-Methyl-Methyldimethoxysilan,
Diphenoxyphosphorigester-Methyl-Trimethoxysilan,
Aminomethyldimethylethoxysilan,
Aminomethylmethyldiethoxysilan, Aminomethyltriethoxysilan,
N-Methylaminomethyldimethylethoxysilan,
N-Methylaminomethylmethyldiethoxysilan,
N-Methylaminomethyltriethoxysilan,
N-Ethylaminomethyldimethylethoxysilan,
N-Ethylaminomethylmethyldiethoxysilan,
N-Ethylaminomethyltriethoxysilan,
N,N-Dimethylaminomethyldimethylethoxysilan,
N,N-Dimethylaminomethylmethyldiethoxysilan,
N,N-Dimethylaminomethyltriethoxysilan,
N,N-Diethylaminomethyldimethylethoxysilan,
N,N-Diethylaminomethylmethyldiethoxysilan,
N,N-Diethylaminomethyltriethoxysilan,
N,N-Dipropylaminomethyldimethylethoxysilan,
N,N-Dipropylaminomethylmethyltriethoxysilan,
N,N-Dipropylaminomethyltriethoxysilan,
N,N-Methylethylaminomethyldimethylethoxysilan,
N,N-Methylethylaminomethylmethyldiethoxysilan,
N,N-Methylethylaminomethyltriethoxysilan,
Anilinomethyldimethylethoxysilan,
Anilinomethylmethyldiethoxysilan,
Anilinomethyltriethoxysilan,
Morpholinomethyldimethylethoxysilan,
Morpholinomethylmethyldiethoxysilan,
Morpholinomethyltriethoxysilan,
N,N,N-Trimethylammoniummethyldimethylethoxysilan,
N,N,N-Trimethylammoniummethylmethyldiethoxysilan,
N,N,N-Trimethylammoniummethyltriethoxysilan,
N,N,N-Triethylammoniummethyldimethylethoxysilan,
N,N,N-Triethylammoniummethylmethyldiethoxysilan,
N,N,N-Triethylammoniummethyltriethoxysilan,
Acryloxymethyldimethylethoxysilan,
Acryloxymethylmethyldiethoxysilan,
Acryloxymethyltriethoxysilan,
Methacryloxymethyldimethylethoxysilan,
Methacryloxymethylmethyldiethoxysilan,
Methacryloxymethyltriethoxysilan,
Chlormethyldimethylethoxysilan,
Chlormethylmethyldiethoxysilan,
Chlormethyltriethoxysilan,
Isocyanatomethyldimethylethoxysilan,
Isocyanatomethylmethyldiethoxysilan,
Isocyanatomethyltriethoxysilan,
Methylcarbamatomethyldimethylethoxysilan,
Methylcarbamatomethylmethyldiethoxysilan,
Methylcarbamatomethyltriethoxysilan,
Mercaptomethyldimethylethoxysilan,
Mercaptomethylmethyldiethoxysilan,
Mercaptomethyltriethoxysilan,
Glycidoxymethyldimethylethoxysilan
Glycidoxymethylmethyldiethoxysilan,
Glycidoxymethyltriethoxysilan,
Dimethoxyphosphorigester-Methyl-Dimethylethoxysilan,
Dimethoxyphosphorigester-Methyl-Methyldiethoxysilan,
Dimethoxyphosphorigester-Methyl-Triethoxysilan,
Diethoxyphosphorigester-Methyl-Dimethylethoxysilan,
Diethoxyphosphorigester-Methyl-Methyldiethoxysilan,
Diethoxyphosphorigester-Methyl-Triethoxysilan,
Diphenoxyphosphorigester-Methyl-Dimethylethoxysilan,
Diphenoxyphosphorigester-Methyl-Methyldiethoxysilan,
Diphenoxyphosphorigester-Methyl-Triethoxysilan,
Aminomethyldimethylacetoxysilan,
Aminomethylmethyldiacetoxysilan,
Aminomethyltriacetoxysilan,
N-Methylaminomethyldimethylacetoxysilan,
N-Methylaminomethylmethyldiacetoxysilan,
N-Methylaminomethyltriacetoxysilan,
N-Ethylaminomethyldimethylacetoxysilan,
N-Ethylaminomethylmethyldiacetoxysilan,
N-Ethylaminomethyltriacetoxysilan,
N,N-Dimethylaminomethyldimethylacetoxysilan,
N,N-Dimethylaminomethylmethyldiacetoxysilan,
N,N-Dimethylaminomethyltriacetoxysilan,
N,N-Diethylaminomethyldimethylacetoxysilan,
N,N-Diethylaminomethylmethyldiacetoxysilan,
N,N-Diethylaminomethyltriacetoxysilan,
N,N-Dipropylaminomethyldimethylacetoxysilan,
N,N-Dipropylaminomethylmethyltriacetoxysilan,
N,N-Dipropylaminomethyltriacetoxysilan,
N,N-Methylethylaminomethyldimethylacetoxysilan,
N,N-Methylethylaminomethylmethyldiacetoxysilan,
N,N-Methylethylaminomethyltriacetoxysilan,
Anilinomethyldimethylacetoxysilan,
Anilinomethylmethyldiacetoxysilan,
Anilinomethyltriacetoxysilan,
Morpholinomethyldimethylacetoxysilan,
Morpholinomethylmethyldiacetoxysilan,
Morpholinomethyltriacetoxysilan,
N,N,N-Trimethylammoniummethyldimethylacetoxysilan,
N,N,N-Trimethylammoniummethylmethyldiacetoxysilan,
N,N,N-Trimethylammoniummethyltriacetoxysilan,
N,N,N-Triethylammoniummethyldimethylacetoxysilan,
N,N,N-Triethylammoniummethylmethyldiacetoxysilan,
N,N,N-Triethylammoniummethyltriacetoxysilan,
Acryloxymethyldimethylacetoxysilan,
Acryloxymethylmethyldiacetoxysilan,
Acryloxymethyltriacetoxysilan,
Methacryloxymethyldimethylacetoxysilan,
Methacryloxymethylmethyldiacetoxysilan,
Methacryloxymethyltriacetoxysilan,
Chlormethyldimethylacetoxysilan,
Chlormethylmethyldiacetoxysilan,
Chlormethyltriacetoxysilan,
Isocyanatomethyldimethylacetoxysilan,
Isocyanatomethylmethyldiacetoxysilan,
Isocyanatomethyltriacetoxysilan,
Methylcarbamatomethyldimethylacetoxysilan,
Methylcarbamatomethylmethyldiacetoxysilan,
Methylcarbamatomethyltriacetoxysilan,
Mercaptomethyldimethylacetoxysilan,
Mercaptomethylmethyldiacetoxysilan,
Mercaptomethyltriacetoxysilan,
Glycidoxymethyldimethylacetoxysilan
Glycidoxymethylmethyldiacetoxysilan,
Glycidoxymethyltriacetoxysilan,
Dimethoxyphosphorigester-Methyl-Dimethylacetoxysilan,
Dimethoxyphosphorigester-Methyl-Methyldiacetoxysilan,
Dimethoxyphosphorigester-Methyl-Triacetoxysilan,
Diethoxyphosphorigester-Methyl-Dimethylacetoxysilan,
Diethoxyphosphorigester-Methyl-Methyldiacetoxysilan,
Diethoxyphosphorigester-Methyl-Triacetoxysilan,
Diphenoxyphosphorigester-Methyl-Dimethylacetoxysilan,
Diphenoxyphosphorigester-Methyl-Methyldiacetoxysilan,
Diphenoxyphosphorigester-Methyl-Triacetoxysilan.

Im Fall von Silanen der Formel II mit
Kondensationsreaktionen katalysierenden Gruppen Y = Amino-, Mercapto-, Isocyanato-, Carbamato-, sind bevorzugt Mono-, Di- und Trialkoxysilane RO-SiR¹₂-CH₂-Y, (RO)₂SiR¹-CH₂-Y und (RO)₃Si-CH₂-Y mit Alkylresten R = Methylrest, Ethylrest, Propylreste wie der iso- oder n-Propylrest, Butylreste wie der t- oder n-Butylrest, Pentylreste wie der neo, die i-oder n-Pentylreste, Hexylreste wie der n-Hexylrest, n-Heptylrest, Octylreste wie der 2-Ethyl-hexyl- oder n-Octylrest, Decylreste wie der n-Decyl, Dodecylreste wie der n-Dodecylrest, Hexadecylreste wie der n-Hexadecylrest, Octadecylreste wie der n-Octadecylrest oder der Acetoxyrest und besonders bevorzugt sind Monoalkoxysilane RO-SiR¹₂-CH₂-Y mit Resten R = Methylrest.

Im Fall von Silanen der Formel II mit
Kondensationsreaktionen nicht katalysierenden Gruppen Y = Halogeno-, Acrylat-, Alkylacrylat-, Glycidoxy-, sind bevorzugt Mono-, Di- und Trialkoxysilane RO-SiR¹₂-CH₂-Y, (RO)₂SiR¹-CH₂-Y und (RO)₃Si-CH₂-Y mit Alkylresten R wie oben definiert.

Im Fall von Silanen der Formel II mit Kondensationsreaktion nicht katalysierenden Gruppen Y = Halogeno-, Acrylat-, Alkylacrylat-, Glycidoxy- sind in einer besonderen Ausführung bevorzugt Monoalkoxysilane RO-SiR¹ ₂-CH₂-Y (n = 2) mit den Alkylresten R wie oben definiert, besonders bevorzugt sind dabei Monoalkoxysilane RO-SiR¹₂-CH₂-Y (n = 2) mit dem Alkylresten R = Methylrest oder Acetoxyrest. Monoalkoxysilane RO-SiR¹₂-CH₂-Y erzeugen eine gut definierte bürstenförmige Oberflächenmodifizierung.

In einer anderen besonderen Ausführung sind bevorzugt Dialkoxysilane RO₂-SiR¹-CH₂-Y (n = 1) mit den Alkylresten R wie oben definiert, besonders bevorzugt sind Dialkoxysilane RO₂-SiR¹-CH₂-Y (n = 1) mit dem Alkylrest R = Methylrest oder Acetoxyrest. Dialkoxysilane RO₂-SiR¹-CH₂-Y erzeugen eine Oberflächenmodifizierung mit cyclischen und schlaufenförmigen Strukturen.

In einer weiteren besonderen Ausführung sind bevorzugt Trialkoxysilane (RO)₃Si-CH₂-Y (n = 0) mit den Alkylresten R wie oben definiert, besonders bevorzugt sind Trialkoxysilane (RO)₃Si-CH₂-Y (n = 0) mit dem Alkylrest R = Methylrest oder Acetoxyrest. Trialkoxysilane (RO)₃Si-CH₂-Y erzeugen eine Oberflächenmodifizierung mit harzartigen Strukturen.

Beispiel für R sind vorzugsweise: Alkylreste wie der Methylrest, Ethylrest, Propylreste wie der iso- oder n-Propylrest, Butylreste wie der t- oder n-Butylrest, Pentylreste wie der neo, die i- oder n-Pentylreste, Hexylreste wie der n-Hexylrest, n-Heptylrest, Octylreste wie der 2-Etyl-hexyl- oder n-Octylrest, Decylreste wie der n-Decyl, Dodecylreste wie der n-Dodecylrest, Hexadecylreste wie der n-Hexadecylrest, Octadecylreste wie der n-Octadecylrest, Arylreste wie der Phenyl-, Biphenyl- oder Naphthenylrest, Alkylarylreste wie der Benzyl-, Ethylphenyl-, Toluyl-, oder die Xylylreste bevorzugt Methylrest, Ethylrest oder Propylreste wie der iso- oder n-Propylrest und besonders bevorzugt der Methylrest.

Beispiele für Y sind vorzugsweise: primärer Aminrest -NH₂, sekundäre Aminreste wie der N-Monomethyl-, N-Monoethyl-, N-Monopropyl-, N-Monobutyl- oder der Anilinorest, tertiäre Aminreste wie der N,N-Dimethyl-, N,N-Diethyl-, N,N-Dipropyl-, N,N-Dibutyl-, N,N-Methylethyl-, N,N-Methylpropyl-, N,N-Ethylpropyl- oder N,N-Methylphenylrest oder der Morpholinorest, der Pyrrolylrest, der Indolylrest, der Pyrazloyl-, Imidazloyl- oder Piperidylrest, tertiäre Aminreste wie der N,N,N-Trimethylammonium-, N,N,N-Triethylammonium- oder N,N,N-Tripropylammoniumrest, der Acrylatrest, Alkylacrylatreste wie der Methacrylat-, Ethylacrylat-, Propylacrylat-, Butylacrylat- oder der Phenylacrylatrest, Halogenoreste wie der Chloro-, Bromooder Iodorest, Isocyanato- und Carbamatorest, Thiolrest, Glycidoxyrest, Phosphonatoreste wie der Dimethoxy-, der Diethoxy- oder der Diphenoxyphosphonatorest

Silane der allgemeinen Formel II, dadurch gekennzeichnet, dass die reaktive Gruppe Y durch einen CH₂-Spacer an das Si-Atom gebunden ist, weisen deutlich höhere Reaktivitäten bezüglich Kondensationsreaktionen am Si-Atom auf, als die gemäß Stand der Technik verwendeten Silane, bei denen die reaktive Gruppe Y durch einen C₃H₆-Spacer an das Si-Atom gebunden ist.
Da die Umsetzung von Feststoffen mit Silanen der allgemeinen Formel II unter milderen Bedingungen, d.h. niedrigeren Temperaturen und kürzeren Reaktionszeiten, durchgeführt werden kann, läuft die Oberflächenmodifizierung weitgehend ohne Zersetzungsreaktionen und dem damit verbundenen Verlust an reaktiven Gruppen und der Bildung von Nebenreaktionsprodukten ab.

Zur Oberflächenmodifizierung können die Silane der allgemeinen Formel II allein oder in beliebigen Gemischen mit Organosiloxanen aufgebaut aus Einheiten der Formel

(R³₃SiO_{1/2}),

und/oder

(R³₂SiO_{2/2}),

und/oder

(R³SiO_{3/2})

eingesetzt werden, wobei die Anzahl von diesen Einheiten in einem Organosiloxan mindestens 2 ist, und R³ ein gegebenenfalls einfach oder mehrfach ungesättigter, einwertiger, gegebenenfalls halogenierter, Kohlenwasserstoffrest mit vorzugsweise 1 bis 18 C-Atomen sein kann oder Halogen, Stickstoffrest, OR⁴, OCOR⁴, O(CH₂)ₓOR⁴ , wobei R⁴ Wasserstoff oder ein einwertiger Kohlenwasserstoffrest mit 1 bis 18 C-Atomen bedeutet, und die Reste R³ dabei gleich oder verschieden sein können. Die Organosiloxane sind bevorzugt bei Belegungstemperatur flüssig.

Beispiele für R³ sind Alkylreste wie der Methylrest, der Ethylrest, Propylreste wie der iso- oder der n-Propylrest, Butylreste wie der t- oder n-Butylrest, Pentylreste wie der neo, die iso- oder der n-Pentylreste, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl- der Biphenyl oder Naphthenylrest, Alkylarylreste wie Benzyl-, Ethylphenyl-Toluyl- oder die Xylylreste, halogenierte Alkylreste wie der 3-Chlorpropyl-, der 3,3,3-Trifluorpropyl oder der Perfluorhexylethylrest, halogenierte Arylreste wie der Chlorphenyl oder Chlorbenzylrest.

Bevorzugte Beispiel für R³ sind der Methylrest, der Octylrest und der Vinylrest, besonders bevorzugt ist der Methylrest.

Beispiele für Organosiloxane sind lineare oder cyclische Dialkylsiloxane mit einer mittleren Anzahl an Dialkylsiloxyeinheiten von größer 2, bevorzugt größer 10. Die Dialkylsiloxane sind bevorzugt Dimethylsiloxane. Beispiele für lineare Polydimethylsiloxane sind solche mit den Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy; besonders bevorzugt sind Trimethylsiloxy und Dimethylhydroxysiloxy. Die Endgruppen können gleich oder unterschiedlich sein.

Bei dem erfindungsgemäßen Verfahren wird ein Feststoff eingesetzt der oberflächenmodifiziert werden soll.

Der eingesetzte Feststoff, der an der Oberfläche OH-Gruppen aufweist, kann beliebig sein, beispielsweise ein organischer Feststoff, wie Cellulose, ein Metall mit oxidierter Oberfläche, wie Silicium, Aluminium, Eisen, ein Mineralglas, wie Quarzglas oder Fensterglas oder ein Metalloxid sein.

Als Basis-(Ausgangs-)-Produkt der Oberflächenmodifizierung wird bevorzugt ein Feststoff mit einer mittleren Partikelgröße. kleiner 1000 µm, insbesondere mit einer mittleren Primärteilchen-Partikelgröße von 5 bis 100 nm eingesetzt. Dabei können diese Primärteilchen nicht isoliert existieren, sondern Bestandteile größerer Aggregate und Agglomerate sein.

Bevorzugte Feststoffe sind Metalloxide. Vorzugsweise weist das Metalloxid eine spezifische Oberfläche von vorzugsweise 0,1 bis 1000 m²/g (gemessen nach der BET Methode nach DIN 66131 und 66132) auf, besonders bevorzugt von 10 bis 500 m²/g.

Das Metalloxid kann Aggregate (Definition nach DIN 53206) im Bereich von vorzugsweise Durchmessern 100 bis 1000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Meßbedingungen) Größen von 1 bis 1000 µm aufweisen kann.

Das Metalloxid ist aus Gründen der technischen Handhabbarkeit vorzugsweise ein Oxid mit kovalentem Bindungs-Anteil in der Metall-Sauerstoff-Bindung, vorzugsweise ein Oxid im Aggregatszustand Feststoff der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder-dioxid, oder ein Oxid der 4. Nebengruppe, wie Titandioxid, Zirkonoxid, oder Hafniumoxid. Andere Beispiele sind stabile Nickel-, Cobalt-, Eisen-, Mangan-, Chrom- oder Vanadiumoxide.

Besonders bevorzugt sind Aluminium(III)-, Titan(IV)- und Silicium(IV)oxide, wie naßchemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Andere Feststoffe sind Silikate, Aluminate oder Titanate, oder Aluminiumschichtsilikate, wie Bentonite, wie Montmorillonite, oder Smektite oder Hektorite.
Ein andere Form einsetzbaren Feststoffs sind Ruße, wie Flammruße, Ofenruße, sogenannte Furnace-Ruße, oder Ruße, die als Farbstoff oder als Verstärkerfüllstoff oder als rheologisches Additive eingesetzt werden können, sogenannte "Carbon Black" Ruße.

Besonders bevorzugt ist pyrogene Kieselsäure, die in einer Flammenreaktion aus Organosiliciumverbindungen hergestellt wird, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch in Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Es können beliebige Gemische der genannte Feststoffe zur Oberflächenmodifizierung eingesetzt werden.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche D_{S} hierbei definiert ist als:
Partikel-Oberfläche A ist proportional zum Partikel-Radius R hoch D_{S}

Vorzugsweise weist die Kieselsäure eine fraktalen Dimension der Masse Dₘ von vorzugsweise kleiner oder gleich als 2,8, bevorzugt gleich oder größer 2,7, besonders bevorzugt von 2,4 bis 2,6 auf. Die fraktale Dimension der Masse Dₘ ist hierbei definiert als:
Partikel-Masse M ist proportional zum Partikel-Radius R hoch Dₘ.

Vorzugsweise weist die Kieselsäure eine Dichte an zugänglichen, d.h. einer chemischen Reaktion zugänglichen Oberflächen-Silanolgruppen SiOH von kleiner als 2,5 SiOH / nm², vorzugsweise kleiner 2,1 SiOH / nm², bevorzugt von kleiner als 2 SiOH / nm², besonders bevorzugt von 1,7 bis 1,9 SiOH / nm² auf.

Es können auf naßchemisch hergestelltem Weg oder bei hoher Temperatur (größer 1000 °C) hergestellte Kieselsäuren eingesetzt werden. Besonders bevorzugt sind pyrogen hergestellte Kieselsäuren. Es können auch hydrophile Metalloxide eingesetzt werden, die frisch hergestellt direkt aus dem Brenner kommen, zwischengelagert oder bereits handelsüblich verpackt sind. Es können auch hydrophobierte Metalloxide oder Kieselsäuren, z.B. handelsübliche Kieselsäuren, eingesetzt werden.

Es können unverdichtete, mit Schüttdichten vorzugsweise kleiner 60 g/l, aber auch verdichtete, mit Schüttdichten vorzugsweise größer 60 g/l, Kieselsäuren eingesetzt werden.

Es können Gemische aus verschiedenen Metalloxiden oder Kieselsäuren eingesetzt werden, so z.B. Mischungen aus Metalloxiden oder Kieselsäuren unterschiedlicher BET-Oberfläche, oder Mischungen aus Metalloxiden mit unterschiedlichem Hydrophobier- oder Silyliergrad.

### Verfahren zur Herstellung des Metalloxids

Das erfindungsgemäße Metalloxid kann in kontinuierlichen, oder diskontinuierlichen Verfahren hergestellt werden, das Verfahren zur Silylierung kann aus einem oder mehreren Schritten aufgebaut sein. Bevorzugt wird das silylierte Metalloxid mittels eines Verfahren hergestellt, bei dem der Herstellungsprozeß in getrennten Schritten erfolgt: (A) zunächst Herstellung des hydrophilen Metalloxids, sodann (B) die Silylierung des Metalloxids mit (1) Beladung des hydrophilen Metalloxids mit Silan der allgemeinen Formel II, (2) Reaktion des hydrophilen Metalloxids mit dem Silan der allgemeinen Formel II und (3) Reinigung des Metalloxids von überschüssigem Silan der allgemeinen Formel II.

Die Oberflächenbehandlung wird bevorzugt in einer Atmosphäre durchgeführt, die nicht zur Oxidation des silylierten Metalloxids führt, d.h. bevorzugt weniger als 10 Vol% Sauerstoff, besonders bevorzugt weniger als 2,5 Vol%, wobei beste Ergebnisse bei weniger als 1 Vol% Sauerstoff erzielt werden.

Belegung, Reaktion und Reinigung können als diskontinuierlicher oder kontinuierlicher Prozess durchgeführt werden.
Aus technischen Gründen bevorzugt ist eine kontinuierliche Reaktionsführung.

Die Belegung erfolgt bevorzugt bei Temperaturen von -30 - 250 °C, bevorzugt 20-150 °C, im besonderen bevorzugt 20-80 °C; bevorzugt wird der Belegungsschritt auf 30-50 °C gekühlt.
Die Verweilzeit beträgt 1 Min - 24 h, bevorzugt 15 Min bis 240 Min, aus Gründen der Raumzeitausbeute besonders bevorzugt 15 Min bis 90 Min.
Der Druck in der Belegung reicht von schwachem Unterdruck bis 0,2 bar bis zum Überdruck von 100 bar, wobei aus technischen Gründen Normaldruck, das heißt druckfreies Arbeiten gegenüber Außen-/Atmosphären-Druck bevorzugt ist.

Das Silan der allgemeinen Formel II wird bevorzugt als Flüssigkeit zugefügt und insbesondere dem pulverförmigen Metalloxid zugemischt.
Dies geschieht vorzugsweise durch Düsentechniken, oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung des Silans mit der pulverförmigen Metalloxid erlauben. Bevorzugt wird das Silan der allgemeinen Formel II als feinstverteiltes Aerosol zugefügt, dadurch gekennzeichnet, daß das Aerosol eine Sinkgeschwindigkeit von 0,1 - 20 cm/s und eine Tropfengröße mit einem aerodynamischen Partikelradius von 5 - 25 µm aufweist.
Bevorzugt erfolgt die Beladung des Metalloxids und die Reaktion mit dem Silan der allgemeinen Formel II unter mechanischer oder gasgetragener Fluidisierung. Besonders bevorzugt ist die mechanische Fluidisierung.
Eine Gas-getragene Fluidisierung kann durch alle inerten Gase erfolgen, die nicht mit dem Silan der allgemeinen Formel II, dem Metalloxid, und dem silylierten Metalloxid reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.
Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.
In einer besonders bevorzugten Ausführung werden nicht abreagiertes Silan der allgemeinen Formel II und Abgase aus dem Reinigungsschritt wieder in den Schritt der Belegung und Beladung des Metalloxids zurückgeführt; dies kann teilweise oder vollständig geschehen, bevorzugt zu 10 - 90 % des gesamten Volumenstromes der aus der Abreinigung austretenden Gasvolumina.
Dies geschieht in geeignet temperierten Vorrichtungen.
Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftranport mit den technisch üblichen Systemen des Gastransports, wie Ventilatoren, Pumpen, Druckluftmebranpumpen. Da die Rückführung der nichtkondensierten Phase bevorzugt ist, empfiehlt sich gegebenenfalls die Beheizung der rückführenden Leitungen.
Die Rückführung des nicht abreagierten Silans der allgemeinen Formel II und der Abgase kann dabei zwischen 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes cyclisches Silan zwischen 1 und 200 Teile, bevorzugt 10 bis 30 Teile betragen.
Die Rückführung der Abreinigungprodukte der Silylierreaktion in die Belegung erfolgt bevorzugt kontinuierlich.

Die Reaktion erfolgt bevorzugt bei Temperaturen 20-200 °C, bevorzugt 20-160 °C und besonders bevorzugt bei 20-100 °C.
Die Reaktionszeit beträgt 5 Min bis 48 h, vorzugsweise 10 Min bis 5 h.
Wahlweise können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.% an protischen Lösungsmittel bezogen auf die Metalloxid zugefügt, besonders bevorzugt 5 bis 25 Gew.%. Besonders bevorzugt ist Wasser.
Wahlweise können saure Katalysatoren, von saurem Charakter im Sinne einer Lewis Säure oder einer Brönsted Säure, wie Chlorwasserstoff oder basische Katalysatoren, von basischem Charakters, im Sinne einer Lewis Base oder einer Brönsted Base, wie Ammoniak, zugesetzt werden. Bevorzugt werden diese in Spuren zugesetzt, d.h. kleiner als 1000 ppm. Besonders bevorzugt werden keine Katalysatoren zugesetzt.

Die Abreinigung erfolgt bei einer Reinigungstemperatur von 20 bis 200 °C, bevorzugt 50°C bis 150°C, besonders bevorzugt von 50 bis 100 °C.
Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, daß bevorzugt ein Mischen und ein Fluidisieren, jedoch nicht völlige Verwirbelung, eintritt.
Der Reinigungsschritt kann weiterhin durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, die nicht mit dem Silan der allgemeinen Formel II, dem Metalloxid, und dem silylierten Metalloxid reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc.

Zusätzlich können während der Silylierung oder im Anschluss an die Reinigung vorzugsweise Verfahren zur mechanischen Verdichtung des Metalloxids eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Silylierung, im Schritt (II) der Reaktion durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung des Metalloxids eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Reinigung Verfahren zur Desagglomerierung der Metalloxid eingesetzt werden, wie Stiftmühlen, Hammermühlen, Gegenstrommühlen, Prallmühlen oder Vorrichtungen zur Mahlsichtung.

Das Silan der allgemeinen Formel II wird vorzugsweise in einer Menge größer 0,5 Gew.% (bezogen auf das Metalloxid), bevorzugt größer 3 Gew.% (bezogen auf das Metalloxid), besonders bevorzugt bevorzugt größer 5 Gew.% (bezogen auf das Metalloxid) eingesetzt.

Ein weiterer Gegenstand der Erfindung ist ein Metalloxid, bevorzugt eine Kieselsäure, im Besonderen eine pyrogene Kieselsäure, mit modifizierter Oberfläche, wobei die Oberfläche mit Gruppen der allgemeinen Formel I modifiziert ist.

Im Fall von Silylresten der Formel I sind Mono-, Di- und Trisiloxyreste -O-SiR¹₂-CH₂-Y, (-O)₂SiR¹-CH₂-Y und (--O)₃Si-CH₂-Y bevorzugt, besonders bevorzugt sind Monosiloxyreste - O-SiR¹₂-CH₂-Y, mit Kondensationsreaktionen katalysierenden Gruppen Y = Amino-, Mercapto-, Isocyanato-, Phosphonato-, Carbamatogruppe.

Im Fall von Silylresten der Formel I sind bevorzugt Mono-, Di- und Trisiloxyreste -O-SiR¹₂-CH₂-Y, (-O)₂SiR¹ -CH₂-Y und (-O)₃Si-CH₂-Y, besonders bevorzugt sind Trisiloxyreste (-O)₃-SiR¹₂-CH₂-Y, mit Kondensationsreaktionen nicht katalysierenden Gruppen Y = Halogeno-, Acrylat-, Alkylacrylat-, Glycidoxygruppe.,

Ein weiterer Gegenstand der Erfindung ist eine Kieselsäure mit modifizierter Oberfläche, wobei die Oberfläche mit Gruppen der allgemeinen Formel I modifiziert ist, mit einer mittleren Primärteilchen-Partikelgröße kleiner als 100 nm, bevorzugt mit einer mittleren Primärteilchen-Partikelgröße von 5 bis 50 nm, wobei diese Primärteilchen nicht isoliert in der Kieselsäure existieren, sondern Bestandteile größerer Aggregate (Definition nach DIN 53206) sind, die einen Durchmessern von 100 bis 1000 nm aufweisen und Agglomerate (Definition nach DIN 53206) aufbauen, die in Abhängigkeit von der äußeren Scherbelastung Größen von 1 bis 500 µm aufweisen, wobei die Kieselsäure eine spezifischen Oberfläche von 10 bis 400 m²/g (gemessen nach der BET Methode nach DIN 66131 und 66132) aufweist, wobei die Kieselsäure eine fraktale Dimension der Masse Dₘ von kleiner oder gleich als 2,8, bevorzugt gleich oder größer 2,7, besonders bevorzugt von 2,4 bis 2,6, und eine Dichte an Oberflächen-Silanolgruppen SiOH von kleiner als 1,5 SiOH/nm², bevorzugt von kleiner als 0,5 SiOH/nm², besonders bevorzugt von kleiner als 0,25 SiOH/nm² aufweist.

Ein weiterer Gegenstand der Erfindung ist ein Verstärkerfüllstoff oder rheologisches Additiv, wobei zumindest ein erfindungsgemäßes Metalloxid oder zumindest eine erfindungsgemäße Kieselsäure enthalten ist.

Das oberflächenmodifizierte Metalloxid ist im weiteren dadurch gekennzeichnet, dass es in polaren Systemen, wie lösemittelfreien Polymeren und Harzen, oder wie Lösungen, Suspensionen, Emulsionen und Dispersionen von organischen Harzen in wässrigen Systemen oder organischen Lösemitteln (z.B.: Polyester, Vinylester, Epoxid, Polyurethan, Alkydharze, u.a.). eine hohe Verdickungswirkung aufweist, und damit als rheologisches Additiv in diesen Systemen geeignet ist.

Das oberflächenmodifizierte Metalloxid ist im weiteren dadurch gekennzeichnet, dass es in unpolaren Systemen, wie unvernetztem Siliconkautschuk, eine geringe Verdickungswirkung aufweist, dabei zugleich aber eine hohe Verstärkungswirkung in den vernetzten Siliconkautschuken zeigt, und damit als Verstärkerfüllstoff für Siliconkautschuke hervorragend geeignet ist.

Das oberflächenmodifizierte Metalloxid ist im weiteren dadurch gekennzeichnet, dass es in pulverförmigen Systemen Verbackungen oder Verklumpungen, z.B. unter Feuchteeinfluß verhindert, aber auch nicht zur Reagglomeration neigt, und damit zur unerwünschten Separierung, sondern Pulver fließfähig erhält und somit belastungsstabile und lagerstabile Mischungen ermöglicht. Im Allgemeinen werden dabei Metalloxidmengen von 0,1 - 3 Gew.% bezogen auf das pulverförmige System eingesetzt.

Dies gilt im besonderen für den Einsatz in nichtmagnetischen und magnetischen Tonern und Entwicklern und Ladungssteuerungshilfsmitteln, z.B. in kontaktlosen oder elektrofotografischen Druck-/Reproduktionsverfahren die 1- und 2-Komponenten Systeme sein können. Dies gilt auch in pulverförmigen Harzen, die als Anstrichsysteme verwendet werden.

Die Erfindung betrifft allgemein den Einsatz des Metalloxids in Systemen von niedriger bis hoher Polarität als viskositätsgebende Komponente. Dies betrifft alle lösemittelfreie, lösemittelhaltigen, wasserverdünnbare, filmbildende Anstrichmittel, gummiartige bis harte Beschichtungen, Klebstoffe, Versiegelungs- und Vergußmassen sowie andere vergleichbare Systeme. Metalloxids kann eingesetzt werden in Systemen, wie:
- Epoxidsysteme
- Polyurethansysteme (PUR)
- Vinylesterharze
- Ungesättigte Polyesterharze
- Wasserlösliche und wasserdispergierbare Harzsysteme
- Lösemittelarme Harzsysteme, sogenannte "high solids".
- Lösemittelfreie Harze, die in Pulverform z.B. als Beschichtungsstoffe appliziert werden.

Das Metalloxid liefert als rheologisches Additiv in diesen Systemen die erforderte notwendige Viskosität, Strukturviskosität, Thixotropie und eine für das Standvermögen an senkrechten Flächen ausreichende Fließgrenze.

Das Metalloxid kann speziell eingesetzt werden als rheologisches Additiv und Verstärkerfüllstoff in unvernetzten und vernetzten Siliconsystemen, wie Siliconelastomere, die aus Siliconpolymeren, wie Polydimethylsiloxanen, Füllstoffen, und weiteren Additiven zusammengesetzt sind, bestehen. Diese können z.B. mit Peroxiden vernetzt werden, oder über Additions-Reaktionen, die sogenannte Hydrosilylierungsreaktion, zwischen olefinischen Gruppen und Si-H Gruppen vernetzt werden, oder über Kondensationsreaktionen zwischen Silanolgruppen, z.B. solche, die unter Wassereinwirkung entstehen.

Das Metalloxid kann ferner eingesetzt werden als Verstärkerfüllstoff, rheologisches Additiv und zusätzlich vernetzende Komponente in Elastomeren, Harzen, Reaktivharzen, und Polymeren.

Das Metalloxid kann ferner eingesetzt werden als rheologisches Additiv und Verstärkerfüllstoff und als zusätzliche vernetzende Komponente zur Verbesserung der mechanischen Eigenschaften, wie Schlagzähigkeit oder Kratzfestigkeit, von Reaktivharzsystemen wie z.B. Epoxy-, Polyurethan-, Vinylester-, ungesättigte Polyester- oder Methacrylatharzen. Dies betrifft alle lösemittelfreie, lösemittelhaltigen, wasserverdünnbare, filmbildende Anstrichmittel, gummiartige bis harte Beschichtungen, Klebstoffe, Versiegelungs- und Vergußmassen sowie andere vergleichbare Systeme. Typische Einsatzmengen des modifizierten Metalloxids liegen im Bereich von 3 - 50% bezogen auf das Harzsystem.

Ein weiterer Gegenstand der Erfindung sind Toner, Entwickler und Ladungssteuerungshilfsmittel, die das oberflächenmodifizierte Metalloxid enthalten. Derartige Entwickler und Toner sind z.B. magnetische 1-Komponenten und 2-Komponenten Toner, aber auch nichtmagnetische Toner. Diese Toner können aus Harzen, wie Styrol- und Acrylharze bestehen, und bevorzugt zu Partikelverteilungen von 1-100 µm vermahlen sein, oder können Harze sein, die in Polymerisationsverfahren in Dispersion oder Emulsion oder Lösung oder in Masse zu Partikelverteilungen von bevorzugt 1 - 100 µm hergestellt wurden. Metalloxid wird bevorzugt eingesetzt zur Verbesserung und Steuerung des Pulver-Fließverhaltens, und / oder zur Regulierung und Steuerung der triboelektrischen Ladungseigenschaften des Toners oder Entwicklers. Derartige Toner und Entwicklern können eingesetzt werden bevorzugt bei elektrophotografischen Print- und Druckverfahren, auch sind sie einsetzbar bei direkten Bildübertragungsverfahren.

Ein Toner hat typischerweise folgende Zusammensetzung
- Fest-Harz als Binder, das ausreichend hart ist, um ein Pulver hieraus herzustellen, bevorzugt mit einem Molekulargewicht über 10000, bevorzugt mit einem Anteil an Polymeren von einem Molekulargewicht unter 10000 von weniger als 10 Gew.%, z.B. ein Polyesterharz, das ein Co-Kondensat aus Diol und Carbonsäure,-ester, oder -anhydrid sein kann, z.B. mit einer Säurezahl von 1-1000, bevorzugt 5-200, oder ein Polyacrylat oder ein Polystyrol, oder Mischungen, oder Co-Polymerisate hieraus sein kann, und mit einem mittleren Partikeldurchmesser kleiner 20 µm, bevorzugt kleiner 15 µm, besonders bevorzugt kleiner 10 µm. Das Tonerharz kann Alkohole, Carbonsäuren und Polycarbonsäure enthalten.
- Technisch übliche Farbstoffe, wie schwarzer Ruß, Farb-Ruß, Cyan-Farbstoffe, Magenta-Farbstoffe, Gelbe Farbstoffe.
- Typischerweise positive Ladungssteuerungsmittel: Ladungssteuernde Additive z.B. vom Typ Nigrosin-Farbstoff, oder Triphenylmethan Farbstoffe substituiert mit tertiären Aminen, oder quaternäre Ammoniumsalze wie CTAB (cetyltrimethylammonium bromide = hexadecyltrimethylammonium bromide), oder Polyamine, typischerweise kleiner 5 Gew.%.
- Wahlweise negative Ladungssteuerungsmittel: Ladungssteuernde Additive wie Metall-haltige Azo-Farbstoffe, oder KupferPhthalocyanin Farbstoffe, oder Metall-Komplexe zum Beispiel von alkylierten Salicylsäure-Derivaten oder Benzoesäure, insbesondere mit Bor oder Aluminium, in den erforderlichen Mengen, typischerweise kleiner 5 Gew.%.
- Gegebenenfalls können, zur Herstellung magnetischer Toner, magnetische Pulver zugesetzt werden, wie z.B. Pulver, die in einem magnetischen Feld magnetisiert werden können, wie ferromagnetische Substanzen, wie Eisen, Kobalt, Nickel, Legierungen, oder Verbindungen wie Magnetit, Hematit oder Ferrit.
- Wahlweise können auch Entwickler zugesetzt werden, wie Eisenpulver, Glaspulver, Nickelpulver, Ferritpulver.
- Metalloxid wird in Gehalten von, bezogen auf ein Fest-Harz als Binder mit 20 µm mittlerem Partikeldurchmesser, von größer 0,01 Gew.%, bevorzugt größer 0,1 Gew.% eingesetzt. Mit abnehmendem mittlerem Partikeldurchmesser des Binders werden im allgemeinen höhere Gehalte an Metalloxid erforderlich, wobei die notwendige Menge an Metalloxid umgekehrt proportional zum Partikeldurchmesser des Binders zunimmt. Der Gehalt an Metalloxid ist vorzugsweise jedoch in jedem Fall kleiner 5 Gew.% bezogen auf Binder Harz.
- Weitere anorganische Zusätze, wie feinteilige und grobteilige Siliiciumdioxide, darunter auch solche mit 100 bis 1000 nm mittlere Durchmesser, Aluminiumoxide, wie pyrogene Aluminiumoxide, Titandioxide, wie pyrogene oder Anatas oder Rutile, Zirconoxide sind möglich.
- Wachse, wie paraffinische Waxe mit 10-500 C-Atomen, Siliconwachse, olefinische Wachse, Wachse mit einer Jodzahl kleiner 50, bevorzugt kleiner 25, und einer Verseifungszahl von 10-1000, bevorzugt 25-300 können eingesetzt werden.

Der Toner kann in verschiedenen Entwicklungsverfahren eingesetzt werden, wie zur elektrophotografischen Bilderzeugung und Reproduktion, wie z.B. magnetische Bürsten-Verfahren, Kaskaden Verfahren, Einsatz von leitfähigen und nicht leitfähigen magnetischen Systemen, Pulverwolkenverfahren, Entwicklung in Abdruck, und andere.

Durch den Einsatz der Silane der allgemeinen Formel II ergeben sich insbesondere folgende Vorteile:
- hohe Reaktionsausbeuten - damit wirtschaftlich und Ressourcen schonend
- Hoher Silyiergrad bei minimalem Einsatz von Silyliermittel
- reproduzierbarer Gehalt an funktionellen Gruppen durch milde Reaktionsbedingungen
- Silylierung unter Verzicht auf Katalysatoren, die oft aus verfahrenstechnischen Gründen im Produkt verbleiben müssen, die die Produktqualität und -performance des Endprodukts negativ beeinflussen könnten.

Alle vorstehenden Symbole der vorstehenden Formeln weisen ihre Bedeutungen jeweils unabhängig voneinander auf.

### Beispiele

### Beispiel 1

Bei einer Temperatur von 25 °C unter Inertgas N₂ werden zu 100 g an pyrogene hydrophiler KIESELSÄURE, mit einer Feuchte kleiner 1% und einem HCl Gehalt kleiner 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 1,5 g vollentsalztes (VE)Wasser in feinstverteilter Form zugedüst und sowie durch Verdüsen über eine Einstoffdüse (Druck 5 bar), 8,5 g Methacryloxymethyltrimethoxysilan zugefügt. Die so beladene KIESELSÄURE wird anschließend unter N₂ 3,0 h bei einer Temperatur von 25 °C zur Reaktion gebracht und anschließend 1 h bei 80 °C in einem 100 l Trockenschrank unter N₂ von Wasser und MeOH gereinigt. Erhalten wird ein hydrophobes weißes KIESELSÄURE-Pulver mit homogener Silyliermittelschicht. Die Analysedaten sind in Tabelle 1 aufgeführt.

### Beispiel 2

Bei einer Temperatur von 25 °C unter Inertgas N₂ werden zu 100 g an pyrogene hydrophiler KIESELSÄURE, mit einer Feuchte kleiner 1% und einem HCl Gehalt kleiner 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 1,5 g VE-(VE = voll entsalztes) Wasser in feinstverteilter Form zugedüst und sowie durch Verdüsen über eine Einstoffdüse (Druck 5 bar), 10,0 g Methacryloxymethyltriethoxysilan zugefügt. Die so beladene KIESELSÄURE wird anschließend unter N₂ 3,0 h bei einer Temperatur von 25 °C zur Reaktion gebracht und anschließend 1 h bei 80 °C in einem 100 l Trockenschrank unter N₂ von Wasser und MeOH gereinigt. Erhalten wird ein hydrophobes weißes KIESELSÄURE-Pulver mit homogener Silyliermittelschicht. Die Analysedaten sind in Tabelle 1 aufgeführt.

### Beispiel 3

Bei einer Temperatur von 25 °C unter Inertgas N₂ werden zu 100 g an pyrogene hydrophiler KIESELSÄURE, mit einer Feuchte kleiner 1% und einem HCl Gehalt kleiner 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 1,5 g VE-Wasser in feinstverteilter Form zugedüst und sowie durch Verdüsen über eine Einstoffdüse (Druck 5 bar), 5,0 g Aminomethyldimethylmethoxysilan zugefügt. Die so beladene KIESELSÄURE wird anschließend unter N₂ 3,0 h bei einer Temperatur von 25 °C zur Reaktion gebracht und anschließend 1 h bei 80 °C in einem 100 l Trockenschrank unter N₂ von Waser und MeOH gereinigt. Erhalten wird ein hydrophobes weißes KIESELSÄURE-Pulver mit homogener Silyliermittelschicht. Die Analysedaten sind in Tabelle 1 aufgeführt.

### Beispiel 4

Bei einer Temperatur von 25 °C unter Inertgas N₂ werden zu 100 g an pyrogener hydrophiler KIESELSÄURE, mit einer Feuchte kleiner 1% und einem HCl Gehalt kleiner 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 1,5 g VE-Wasser in feinstverteilter Form zugedüst und sowie durch Verdüsen über eine Einstoffdüse (Druck 5 bar), 6,5 g Aminomethyltrimethoxysilan zugefügt. Die so beladene KIESELSÄURE wird anschließend unter N₂ 3,0 h bei einer Temperatur von 25 °C zur Reaktion gebracht und anschließend 1 h bei 80 °C in einem 100 l Trockenschrank unter N₂ von Wasser und MeOH gereinigt. Erhalten wird ein hydrophobes weißes KIESELSÄURE-Pulver mit homogener Silyliermittelschicht.
Die Analysedaten sind in Tabelle 1 aufgeführt.

### Beispiel 5

Bei einer Temperatur von 25 °C unter Inertgas N₂ werden zu 100 g an pyrogener hydrophiler KIESELSÄURE, mit einer Feuchte kleiner 1% und einem HCl Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker-Chemie GmbH, München, D), durch Verdüsen über eine Einstoffdüse (Druck 5 bar), 13,5 g Diethylaminomethyl-diethoxymethylsilan zugefügt. Die so beladene KIESELSÄURE wird anschließend unter N₂ 3,0 h bei einer Temperatur von 25 °C zur Reaktion gebracht und anschließend 1 h bei 80 °C in einem 100 l Trockenschrank unter N₂ gereinigt. Erhalten wird ein hydrophobes weißes KIESELSÄURE-Pulver mit homogener Silyliermittelschicht. Die Analysedaten sind in Tabelle 1 aufgeführt.

### Beispiel 6

In einer kontinuierlichen Apparatur werden bei einer Temperatur von 30 °C unter Inertgas N₂ zu einem Massestrom von 1000 g/h an pyrogener hydrophiler KIESELSÄURE, mit einer Feuchte kleiner 1% und einem HCl Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker-Chemie GmbH, München, D), 50 g/h VE-Wasser in feinstverteilter Form zugedüst, 180 g/h eines OHendständigen Polydimethylsiloxans mit einer Viskosität bei 25 °C von 40 mPas und einem OH-Gehalt von 4 Gew.%, sowie 130 g/h Methacryloxymethyltrimethoxysilan in flüssiger, feinstverteilter Form zugefügt durch Verdüsen über eine Einstoffdüse (Druck 10 bar) zugefügt. Die so beladene KIESELSÄURE wird bei einer Verweilzeit von 2 Stunden bei einer Temperatur von 30 °C weiter mittels Rühren fluidisiert, und anschließend in einem Reaktor bei 100 °C und 4 Stunden Verweilzeit zur Reaktion gebracht. Erhalten wird ein hydrophobes weißes KIESELSÄURE-Pulver mit homogener Silyliermittelschicht.
Die Analysedaten sind in Tabelle 1 aufgeführt.

### Beispiel 7

In einer kontinuierlichen Apparatur werden bei einer Temperatur von 30 °C unter Inertgas N₂ zu einem Massestrom von 1000 g/h an pyrogener hydrophiler KIESELSÄURE, mit einer Feuchte kleiner 1% und einem HCl Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker-Chemie GmbH, München, D), 50 g/h VE-Wasser in feinstverteilter Form zugedüst, 100 g/h Chlormethyltrimethoxysilan in flüssiger, feinstverteilter Form zugefügt durch Verdüsen über eine Einstoffdüse (Druck 10 bar) zugefügt. Die so beladene KIESELSÄURE wird bei einer Verweilzeit von 3 Stunden bei einer Temperatur von 30 °C weiter mittels Rühren fluidisiert, und anschließend in einem Reaktor bei 120 °C und 1 Stunde Verweilzeit von Wasser und MeOH gereinigt. Erhalten wird ein hydrophobes weißes KIESELSÄURE-Pulver mit homogener Silyliermittelschicht.
Die Analysedaten sind in Tabelle 1 aufgeführt.

### Vergleichsbeispiel V1 (nicht erfindungsgemäß)

Bei einer Temperatur von 25 °C unter Inertgas N₂ werden zu 100 g an hydrophiler KIESELSÄURE, mit einer Feuchte < 1% und einem HCl Gehalt < 100 ppm und mit einer spezifischen Oberfläche von 200 m²/g (gemessen nach der BET Methode nach DIN 66131 und 66132) (erhältlich unter dem Namen WACKER HDK N20 bei Wacker-Chemie GmbH, München, D), 5,0 g NH₃-Wasser in feinstverteilter Form zugedüst sowie durch Verdüsen über eine Einstoffdüse (Druck 5 bar), 16,0 g Methacryloxypropyltrimethoxysilan (erhältlich unter dem Namen Silan GF31 bei Wacker-Chemie GmbH, München, D) zugefügt. Die so beladene KIESELSÄURE wird anschließend in einem 100 l Trockenschrank unter N₂ 4,0 h bei einer Temperatur von 150 °C zur Reaktion gebracht. Erhalten wird ein hydrophobes weißes KIESELSÄURE-Pulver mit homogener Silyliermittelschicht.
Die Analysedaten sind in Tabelle 1 aufgeführt.

### Beispiel 8

Bei einer Temperatur von 25 °C unter Inertgas N₂ werden zu 100 g an pyrogenem Aluminiumoxid mit einer spezifischen Oberfläche von 100 m²/g (gemessen nach der BET Methode nach DIN 66131 und 66132) (erhältlich unter dem Namen Degussa Aluminium Oxide C bei Degussa, Hanau, D), 1,2 g vollentsalztes (VE)Wasser in feinstverteilter Form zugedüst und sowie durch Verdüsen über eine Einstoffdüse (Druck 5 bar), 6,3 g Methacryloxymethyltrimethoxysilan zugefügt. Das so beladene Aluminiumoxid wird anschließend unter N₂ 3,0 h bei einer Temperatur von 25 °C zur Reaktion gebracht und anschließend 1 h bei 80 °C in einem 100 l Trockenschrank unter N₂ von Wasser und MeOH gereinigt. Erhalten wird ein hydrophobes weißes Aluminiumoxid-Pulver mit homogener Silyliermittelschicht. Die Analysedaten sind in Tabelle 1 aufgeführt.

**Tabelle 1 Analysedaten des Metalloxids der Beispiele 1 bis V1**

| Beispiel | %C | BET [m²/g] | pH | Si-AAS [ppm / 100 g Metalloxid] |
|---|---|---|---|---|
| 1 | 2,3 | 85 | 5,6 | 151 |
| 2 | 2,9 | 93 | 5,8 | 490 |
| 3 | 1,3 | 83 | 10,2 | < 12 |
| 4 | 1,15 | 80 | 10,2 | < 12 |
| 5 | 3,2 | 118 | 9,8 | < 12 |
| 6 | 8,05 | 109 | 5,3 | 1315 |
| 7 | 1,08 | 123 | 5,1 | 273 |
| 8 | 1,7 | 68 | 5,5 | 552 |
| V1 | 5,14 | 114 | 5,5 | 527 |

### Beschreibung der Analysenmethoden

1. Kohlenstoffgehalt (%C)
   Elementaranalyse auf Kohlenstoff; Verbrennen der Probe bei über 1000°C im O₂-Strom, Detektion und Quantifizierung des entstehenden CO₂ mit IR; Gerät LECO 244
2. BET
   gemessen nach der BET Methode nach DIN 66131 und 66132
3. pH
   4%ig (Gew%) Suspension des Metalloxids in gesättigter wässrige Kochsalzlösung : Methanol = 50 : 50
4. Si-AAS
   Extraktion von Metalloxid mit THF und Bestimmung des Si-Gehalts im Filtrat des Extrakts mittels Si-AAS zur quantitativen Bestimmung der löslichen Bestandteile nach Oberflächenmodifikation

### Beispiel 9:

### Ladungsverhalten der KIESELSÄURE

Je 50 g eines Ferrit Carriers mit einem mittleren Partikeldurchmesser von 80 µm werden mit je 0,5 g der KIESELSÄURE aus den Beispielen 3 und 4 bei RT durch Schütteln in einem 100 ml PE-Gefäß während 15 Min vermischt. Vor der Messung werden diese Mischungen während 5 Minuten bei 64 UpM in einem geschlossenen 100 ml PE-Gefäß auf einem Rollenbock aktiviert. Mit einer "hard-blow-off cell" ( ca. 3 g KIESELSÄURE, Kapazität 10 nF, 45 µm Sieb, Luftstrom 1 l/Min, Luftdruck 2,4 kPa, Meßzeit 90 sec) ( EPPING GmbH, D-85375 Neufahrn ) wird das triboelektrische Aufladungsverhalten der KIESELSÄURE gemessen als Verhältnis von KIESELSÄURE-Ladung pro KIESELSÄURE-Masse (q/m).

**Tabelle 2**

| Beispiel | Ladungsverhalten q/m gegen Ferrit [µC/g] |
|---|---|
| Carrier + Beispiel 3 | + 280 |
| Carrier + Beispiel 4 | + 130 |

### Beispiel 10

### Fließ- und Ladungsverhalten von KIESELSÄURE-enthaltendem Toner

100 g eines KIESELSÄURE-freien magnetischen 1-Komponenten Trockentoners, Typ negativ ladend, "crushed type", Basis Copolymer Styrol/Methacrylat, mit einer mittleren Partikelgröße von 14 µm (z.B. erhältlich bei der Firma IMEX, Japan) werden mit 0,4 g einer KIESELSÄURE nach Beispielen 3-4 in einem Taumelmischer (z.B. Turbular) während 1 Stunde bei RT gemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

**Tabelle 3**

| Beispiel | Tonerladung [µC/g] | Fließverhalten [mg] |
|---|---|---|
| KIESELSÄURE- freier Toner | + 0,50 | 2 |
| Toner + Beispiel 3 | + 3,0 | 48 |
| Toner + Beispiel 4 | + 1,8 | 27 |

## Patentansprüche

1. Verfahren zur Herstellung eines Metalloxids mit Gruppen der allgemeinen Formel I
-O₁₊ₙ-SiR¹ ₂₋ₙ-CH₂-Y (I),
bei dem ein Feststoff, der an der Oberfläche OH-Gruppen aufweist, mit Silanen der allgemeinen Formel II
RO₁₊ₙ-SiR¹ ₂₋ₙ-CH₂-Y (II),
durch Verdüsen
umgesetzt wird, wobei
**R** ein C-O gebundener C₁-C₁₅-Kohlenwasserstoff-Rest,
**R**^{**1**} ein Wasserstoffatom oder einen gegebenenfalls mit -CN, -NCO, -NR^{**x**}₂, -COOH, -COOR^{**x**}, -Halogen, -Acryl, -Epoxy, -SH, -OH oder -CONR^{**x**}₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR^{**x**}- ersetzt sein können und in denen eine oder mehrere, einander nicht benachbarte Methineinheiten durch Gruppen, -N=,-N=N-, oder -P= ersetzt sein können, wobei R¹ gleich oder verschieden sein kann,
**Y** eine funktionelle Gruppe -NR^{x}₂, -OC(O)C(R)=CH₂ (R = H , C₁₋C₁₅-Kohlenwasserstoff-Rest), -Halogen, -NCO, (R¹O)₂(O)P-
**R**^{**x**} ein Wasserstoffatom oder C₁-C₁₅-Kohlenwasserstoff- oder Arylrest, wobei R^{x} gleich oder verschieden sein kann, und n = 0, 1, 2 bedeutet.

2. Verfahren nach Anspruch 1, **dadurch gekennzeichnet, dass** die Silane der allgemeinen Formel II in beliebigen Gemischen mit Organosiloxanen aufgebaut aus Einheiten der Formel
(R³₃SiO_{1/2}), und/oder
(R³₂SiO_{2/2}), und/oder
(R³SiO_{3/2})
eingesetzt werden, wobei die Anzahl von diesen Einheiten in einem Organosiloxan mindestens 2 ist, und R³ ein gegebenenfalls einfach oder mehrfach ungesättigter, einwertiger, gegebenenfalls halogenierter, Kohlenwasserstoffrest mit 1 bis 18 C-Atomen ist oder Halogen, Stickstoffrest, OR⁴, OCOR⁴, O(CH₂)ₓOR⁴ , wobei R⁴ Wasserstoff oder ein einwertiger Kohlenwasserstoffrest mit 1 bis 18 C-Atomen bedeutet, und die Reste R³ dabei gleich oder verschieden sein können.

3. Verfahren nach Anspruch 1 oder 2, **dadurch gekennzeichnet, dass Y** eine Amino-, Mercapto-, Isocyanato- , Phosphonato-, oder Carbamatogruppe ist.

4. Verfahren nach Anspruch 3, **dadurch gekennzeichnet, dass** das Silan der Formel II ein Monoalkoxysilan ist.

5. Verfahren nach Anspruch 1 oder 2, **dadurch gekennzeichnet, dass Y** eine Halogeno-, Acrylat-, Alkylacrylat- oder Glycidoxygruppe ist.

6. Verfahren nach Anspruch 5, **dadurch gekennzeichnet, dass** das Silan der Formel II ein Monoalkoxysilane RO-SiR¹₂-CH₂-Y (n = 2) mit dem Alkylrest R = Methylrest oder Acetoxyrest ist.

7. Verfahren nach Anspruch 5, **dadurch gekennzeichnet, dass** das Silan der Formel II ein Dialkoxysilane RO₂-SiR¹-CH₂-Y (n = 1) mit dem Alkylrest R = Methylrest oder Acetoxyrest ist.

8. Verfahren nach Anspruch 5, **dadurch gekennzeichnet, dass** das Silan der Formel II ein Trialkoxysilane (RO)₃Si-CH₂-Y (n = 0) mit dem Alkylrest R = Methylrest oder Acetoxyrest ist.

9. Verfahren nach einem der Ansprüche 1 bis 8, **dadurch gekennzeichnet, dass** das Metalloxid Siliciumdioxid ist.

10. Kieselsäure mit modifizierter Oberfläche, **dadurch gekennzeichnet, dass** die Oberfläche mit Gruppen der allgemeinen Formel I modifiziert ist und die Dichte an Oberflächen-Silanolgruppen kleiner als 1,5/nm² ist.

11. Kieselsäure nach Anspruch 10, **dadurch gekennzeichnet, dass** die Gruppe der Formel I ein Mono-, Di- und Trisiloxyrest der Formel -O-SiR¹₂-CH₂-Y, (-O)₂SiR¹-CH₂-Y und (--O)₃Si-CH₂-Y ist, wobei Y eine Amino-, Mercapto-, Isocyanato-, Phosphonato-, Carbamatogruppe bedeutet.

12. Kieselsäure nach Anspruch 11, **dadurch gekennzeichnet, dass** die Gruppe der Formel I ein Monosiloxyreste -O-SiR¹₂-CH₂-Y ist, wobei Y eine Amino-, Mercapto-, Isocyanato-, Phosphonato-, Carbamatogruppe bedeutet.

13. Kieselsäure nach Anspruch 10, **dadurch gekennzeichnet, dass** die Gruppe der Formel I ein Mono-, Di- und Trisiloxyrest der Formel -O-SiR¹₂-CH₂-Y, (-O)₂SiR¹-CH₂-Y und (--O)₃Si-CH₂-Y ist, wobei Y Halogeno-, Acrylat-, Alkylacrylat-, Glycidoxygruppe bedeutet.

14. Metalloxid nach Anspruch 13, **dadurch gekennzeichnet, dass** die Gruppe der Formel I ein Trisiloxyreste (-O)₃-SiR¹₂-CH₂-Y ist, wobei Y Halogeno-, Acrylat-, Alkylacrylat-, Glycidoxygruppe bedeutet.

15. Verstärkerfüllstoff, rheologisches Additiv und zusätzlich vernetzende Komponente in Elastomeren, Harzen, Reaktivharzen, und Polymeren, **dadurch gekennzeichnet, dass** zumindest ein Metalloxid herstellbar nach einem der Ansprüche 1 bis 9 oder zumindest eine Kieselsäure nach einem der Ansprüche 10 bis 14 enthalten ist.

16. Toner, Entwickler oder Ladungssteuerungshilfsmittel, **dadurch gekennzeichnet, dass** zumindest ein Metalloxid herstellbar nach einem der Ansprüche 1 bis 9 oder zumindest eine Kieselsäure nach einem der Ansprüche 10 bis 14 enthalten ist.

## Claims

1. Process for preparing a metal oxide having groups of the general formula I
-O₁₊ₙ-SiR¹ ₂₋ₙ-CH₂-Y (I)
which involves reacting a solid having OH groups on the surface with silanes of the general formula II
RO₁₊ₙ-SiR¹ ₂₋ₙCH₂-Y (II)
by atomization,
where
**R** is a C-O bonded C₁-C₁₅ hydrocarbon radical,
**R**^{**1**} is a hydrogen atom or an Si-C bonded C₁-C₂₀ hydrocarbon radical unsubstituted or substituted by -CN, -NCO, -NR^{**x**}₂, -COOH, -COOR^{**x**}, -halo, -acryloyl, -epoxy, -SH, -OH or -CONR^{**x**}₂, or C₁-C₁₅ hydrocarbonoxy radical, in each of which one or more nonadjacent methylene units may have been replaced by groups -O-, -CO-, -COO-, -OCO-, or -OCOO-, -S- or -NR^{**x**}- and in which one or more nonadjacent methine units may have been replaced by groups -N=,-N=N- or -P=, each R¹ being identical or different,
**Y** is a functional group -NR^{x}₂, -OC(O)C(R)=CH₂ (R = H, C₁-C₁₅ hydrocarbon radical), -halo, -NCO or (R¹O)₂(O)P-,
**R**^{**x**} is a hydrogen atom or C₁-C₁₅ hydrocarbon or aryl radical, each R^{x} being identical or different, and n is 0, 1 or 2.

2. Process according to Claim 1, **characterized in that** the silanes of the general formula II are used in any desired mixtures with organosiloxanes composed of units of the formula
(R³₃SiO_{1/2}), and/or
(R³₂SiO_{2/2}), and/or
(R³SiO_{3/2)},
the number of these units in an organosiloxane being at least 2, and R³ is an optionally mono- or polyunsaturated, monovalent, optionally halogenated hydrocarbon radical having 1 to 18 carbon atoms or halogen, nitrogen radical, OR⁴, OCOR⁴, O(CH₂)ₓOR⁴, where R⁴ is hydrogen or a monovalent hydrocarbon radical having 1 to 18 carbon atoms, and the radicals R³ may be identical or different.

3. Process according to Claim 1 or 2, **characterized in that** Y is an amino, mercapto, isocyanato, phosphonato or carbamato group.

4. Process according to Claim 3, **characterized in that** the silane of the formula II is a monoalkoxysilane.

5. Process according to Claim 1 or 2, **characterized in that** Y is a halo, acrylate, alkylacrylate or glycidyloxy group.

6. Process according to Claim 5, **characterized in that** the silane of the formula II is a monoalkoxysilane RO-SiR¹₂-CH₂-Y (n = 2) with the alkyl radical R = methyl radical or acetoxy radical.

7. Process according to Claim 5, **characterized in that** the silane of the formula II is a dialkoxysilane RO₂-SiR¹-CH₂-Y (n = 1) with the alkyl radical R = methyl radical or acetoxy radical.

8. Process according to Claim 5, **characterized in that** the silane of the formula II is a trialkoxysilane (RO)₃Si-CH₂-Y (n = 0) with the alkyl radical R = methyl radical or acetoxy radical.

9. Process according to any of Claims 1 to 8, **characterized in that** the metal oxide is silicon dioxide.

10. Silica with a modified surface, **characterized in that** the surface is modified with groups of the general formula I and the density of surface silanol groups is less than 1.5/nm².

11. Silica according to Claim 10, **characterized in that** the group of the formula I is a mono-, di- and trisiloxy radical of the formula -O-SiR¹₂-CH₂-Y, (-O)₂SiR¹-CH₂-Y, and (--O)₃Si-CH₂-Y, Y being an amino, mercapto, isocyanato, phosphonato or or carbamato group.

12. Silica according to Claim 11, **characterized in that** the group of the formula I is a monosiloxy radical -O-SiR¹₂-CH₂-Y, Y being an amino, mercapto, isocyanato, phosphonato or carbamato group.

13. Silica according to Claim 10, **characterized in that** the group of the formula I is a mono-, di- and trisiloxy radical of the formula -O-SiR¹₂-CH₂-Y, (-O)₂SiR¹-CH₂-Y, and (--O)₃Si-CH₂-Y, Y being halo, acrylate, alkylacrylate, glycidyloxy group.

14. Metal oxide according to Claim 13, **characterized in that** the group of the formula I is a trisiloxy radical (-O)₃-SiR¹₂₋CH₂-Y, Y being halo, acrylate, alkylacrylate, glycidyloxy group.

15. Reinforcing filler, rheological additive, and additionally crosslinking component in elastomers, resins, including reactive resins, and polymers, **characterized in that** at least one metal oxide preparable according to any of Claims 1 to 9 or at least one silica according to any of Claims 10 to 14 is present.

16. Toners, developers or charge control agents, **characterized in that** at least one metal oxide preparable according to any of Claims 1 to 9 or at least one silica according to any of Claims 10 to 14 is present.

## Revendications

1. Procédé de préparation d'un oxyde métallique comportant des groupes de la formule générale I
-O₁₊ₙ-SiR¹ ₂₋ₙ-CH₂-Y (I),
dans lequel on fait réagir un solide présentant à sa surface des groupes OH, avec des silanes de la formule générale II
RO₁₊ₙ-SiR¹ ₂₋ₙ-CH₂-Y (II),
par atomisation, avec
R représentant un radical hydrocarboné en C₁ à C₁₅ lié par C-O,
R¹ représentant un atome d'hydrogène ou un radical hydrocarboné en C₁ à C₂₀ ou un radical hydrocarboné en C₁ à C₁₅ lié par Si-C, éventuellement substitué par un radical -CN, -NCO, -NR^{x}₂, -COOH, -COOR^{x}, halogéno, acryle, époxy, -SH, -OH ou -CONR^{x}₂, où à chaque fois une ou plusieurs unités méthylène non voisines peuvent être remplacées par des groupes -O-, -CO-, -COO-, -OCO ou -OCOO-, -S- ou -NR^{x}, et où une ou plusieurs unités méthine non voisines peuvent être remplacées par des groupes -N=, -N=N- ou -P=, où les R¹ peuvent être identiques ou différents,
Y représentant un groupe fonctionnel -NR^{x}₂, -OC(O)C(R)=CH₂ (R = H, radical hydrocarboné en C₁ à C₁₅), halogène, -NCO, (R¹O)₂(O)P-,
R^{x} représentant un atome d'hydrogène ou un radical aryle ou hydrocarboné en C₁ à C₁₅, où les R^{x} peuvent être identiques ou différents, et n = 0, 1, 2.

2. Procédé suivant la revendication 1, **caractérisé en ce que** les silanes de la formule générale II sont mis en oeuvre en mélanges quelconques avec des organosiloxanes constitués d'unités de la formule
(R³₃SiO_{1/2}), et/ou
(R³₂SiO_{2/2}), et/ou
(R³SiO_{3/2}),
le nombre de ces unités dans un organosiloxane étant d'au moins 2, et R³ étant un radical hydrocarboné comportant de 1 à 18 atomes de C, éventuellement monoinsaturé ou polyinsaturé, monovalent, éventuellement halogéné, ou un halogène, un radical d'azote, OR⁴, OCOR⁴, O (CH₂)ₓOR⁴, où R⁴ représente de l'hydrogène ou un radical hydrocarboné monovalent comportant de 1 à 18 atomes de C, et les radicaux R³ peuvent ici être identiques ou différents.

3. Procédé suivant la revendication 1 ou 2, **caractérisé en ce que** Y est un groupe amino, mercapto, isocyanato, phosphonato ou carbamato.

4. Procédé suivant la revendication 3, **caractérisé en ce que** le silane de la formule II est un monoalcoxysilane.

5. Procédé suivant la revendication 1 ou 2, **caractérisé en ce que** Y est un groupe halogéno, acrylate, alkylacrylate ou glycidoxy.

6. Procédé suivant la revendication 5, **caractérisé en ce que** le silane de la formule II est un monoalcoxysilane RO-SiR¹₂-CH₂-Y (n = 2) où le radical alkyle R est un radical méthyle ou un radical acétoxy.

7. Procédé suivant la revendication 5, **caractérisé en ce que** le silane de la formule II est un dialcoxysilane RO₂-SiR¹-CH₂-Y (n = 1) où le radical alkyle R est un radical méthyle ou un radical acétoxy.

8. Procédé suivant la revendication 5, **caractérisé en ce que** le silane de la formule II est un trialcoxysilane (RO)₃Si-CH₂-Y (n = 0) où le radical alkyle R est un radical méthyle ou un radical acétoxy.

9. Procédé suivant l'une quelconque des revendications 1 à 8, **caractérisé en ce que** l'oxyde métallique est du dioxyde de silicium.

10. Acide silicique à surface modifiée, **caractérisé en ce que** la surface est modifiée par des groupes de la formule générale I et **en ce que** la densité des groupes silanol de surface est inférieure à 1,5/nm².

11. Acide silicique suivant la revendication 10, **caractérisé en ce que** le groupe de la formule I représente un radical mono-, di- et trisiloxy de formule -O-SiR¹₂-CH₂-Y, (-O)₂SiR¹-CH₂-Y et (--O)₃Si-CH₂-Y, où Y représente un groupe amino, mercapto, isocyanato, phosphonato, carbamato.

12. Acide silicique suivant la revendication 11, **caractérisé en ce que** le groupe de formule I représente un radical monosiloxy -O-SiR¹₂-CH₂-Y, où Y représente un groupe amino, mercapto, isocyanato, phosphonato, carbamato.

13. Acide silicique suivant la revendication 10, **caractérisé en ce que** le groupe de la formule I est un radical mono-, di- et trisiloxy de formule -O-SiR¹₂-CH₂₋Y, (-O)₂SiR¹-CH₂-Y et (--O)₃Si-CH₂-Y, où Y représente un groupe halogéno, acrylate, alkylacrylate, glycidoxy.

14. Oxyde métallique suivant la revendication 13, **caractérisé en ce que** le groupe de la formule I représente un radical trisiloxy (-O)₃SiR¹₂-CH₂-Y, où Y représente un groupe halogéno, acrylate, alkylacrylate, glycidoxy.

15. Charge de renforcement, additif rhéologique et composants additionnellement réticulants dans des élastomères, des résines, des résines réactives et des polymères, **caractérisés en ce qu'**ils contiennent au moins un oxyde métallique qui peut être préparé suivant l'une quelconque des revendications 1 à 9 ou au moins un acide silicique suivant l'une quelconque des revendications 10 à 14.

16. Toner, développeur ou auxiliaire de contrôle de charge, **caractérisés en ce qu'**ils contiennent au moins un oxyde métallique qui peut être préparé suivant l'une quelconque des revendications 1 à 9 ou au moins un acide silicique suivant l'une quelconque des revendications 10 à 14.
